# EUROPÄISCHE PATENTSCHRIFT

(11) **EP 0 820 219 B1**
(45) Veröffentlichungstag und Bekanntmachung des Hinweises auf die Patenterteilung: **02.01.2003**
(21) Anmeldenummer: 96904027.8
(22) Anmeldetag: 08.02.1996
(51) Int. Cl.: A01C 17/00

(54) **SCHLEUDERDÜNGERSTREUER**
CENTRIFUGAL FERTILISER SPREADER
EPANDEUR D'ENGRAIS CENTRIFUGE

(30) Priorität: 08.04.1995 DE 19513423
(43) Veröffentlichungstag der Anmeldung: 28.01.1998
(73) Patentinhaber: Amazonen-Werke H. Dreyer GmbH & Co. KG, 49202 Hasbergen (DE)
(72) Erfinder: DREYER, Heinz, D-49205 Hasbergen (DE)
(74) Vertreter: Grünecker, Kinkeldey, Stockmair & Schwanhäusser Anwaltssozietät
(86) Internationale Anmeldenummer: EP9600531
(87) Internationale Veröffentlichungsnummer: WO96032005

(56) Entgegenhaltungen:
- EP-A- 0 392 288
- EP-A- 0 545 894
- DE-A- 1 582 091

## Beschreibung

Die Erfindung betrifft einen Schleuderdüngerstreuer gemäß des Oberbegriffes des Patentanspruches 1. Ein derartiger Schleuderdüngerstreuer ist aus EP-A-0392288 bekannt.

Ein ähnlicher Schleuderdüngerstreuer ist beispielsweise durch die deutsche Offenlegungsschrift 15 82 091 bekannt. Dieser Schleuderdüngerstreuer weist einen Vorratsbehälter auf, unter dessen unteren Bereich zwei Schleuderscheiben nebeneinander angeordnet sind. Jeder Schleuderscheibe sind zwei im Boden des Vorratsbehälters angeordnete Dosierorgane zugeordnet, die als über Schieber in ihrer Öffnungsweite einstellbare Auslauföffnungen ausgebildet sind, durch welche der Dünger den Schleuderscheiben auf vorbestimmten Aufgabepunkte (Flächen) zugeführt wird. Über diese beiden Auslauföffnungen werden jeder Schleuderscheibe die sich im Vorratsbehälter befindlichen Düngemittelpartikel in vorbestimmter und einstellbarer Weise zugeführt, wobei die Düngemittelpartikel jeweils auf zwei Aufgabepunkten jeder Schleuderscheibe aufgegeben werden. Die den Schleuderscheiben zugeordneten Auslauföffnungen werden über miteinander gekoppelte Gestänge, der sogenannten Streumengeneinstellvorrichtung, gleichzeitig und in gleicher Weise zur Veränderung der auszubringenden Streugutmenge verstellt. Die Kopplung der den Dosierorganen zugeordneten Gestängen mit der gemeinsamen Streumengenverstellvorrichtung bewirkt, dass die Dosierorgane jeder Schleuderscheibe im Sinne einer übereinstimmenden Vergrößerung bzw. Verkleinerung verstellt werden. Bei diesem bekannten Schleuderdüngerstreuer werden die Schleuderscheiben gegenläufig rotierend angetrieben und weisen ein symmetrisches Streubild auf. Da aber die von den Schleuderscheiben erzeugten Streusektoren in Abhängigkeit von der eingestellten Streumenge, oder auch bei einer anderen Streugutart insgesamt wandern können, oder sich die Verteilung der in jedem Sektor abgeworfenen Streugutmengen ändem kann, sind Vorkehrungen für die Einstellung der Richtung der Streusektoren der Schleuderscheiben vorgesehen. Mittels dieser Vorkehrung, die darin besteht, dass die Streumengeneinstellvorrichtung beweglich und feststellbar an dem Rahmen des Schleuderdüngerstreuers gelagert ist, kann die Lage der Auslauföffnungen gegenüber den Schleuderscheiben über ein Gestänge gleichzeitig und in gleicher Weise zur Veränderung des Streubildes verstellt werden.

Es ist mit Hilfe der Verstellung der Aufgabepunkte der Düngemittelpartikel auf der Schleuderscheibe möglich, das Streubild zu beeinflussen, indem die Lage der Streusektoren verschwenkbar ist. Insbesondere soll hierdurch erreicht werden, dass ein möglichst gleichmäßiges Streubild über die gesamte zu bestreuende Fläche erzielt wird.

Versuche haben jedoch nun ergeben, dass diese gemeinsame Verschwenkung der Dosieröffnung gegenüber den Schleuderscheiben, d. h. eine gleichzeitige Veränderung sämtlicher Aufgabepunkte nicht immer wünschenswert und auch nicht ausreichend ist.

Der Erfindung liegt daher die Aufgabe zugrunde, mit einfachsten Mitteln die Möglichkeit zu schaffen, das Streubild zu korrigieren.

Diese Aufgabe wird erfindungsgemäß durch die Maßnahme gemäß des Kennzeichens des Anspruches 1 gelöst. Infolge dieser Maßnahme ist es auf einfachste Weise möglich, durch eine entsprechende Einstellung der Schieber die Aufgabepunkte des Düngers auf der Schleuderscheibe einzustellen und so das Streubild zu korrigieren. Somit können die Aufgabepunkte präzise eingestellt werden. Weiterhin ist es möglich, wenn beispielsweise durch Verschließen der entsprechenden Auslauföffnung oder Auslauföffnungen durch die Schieber die Düngerzufuhr zu den Schleuderscheiben unterbrochen wird, eine Arbeitsbreitenreduzierung zu erreichen. Es wird also auf diese Weise auch eine Teilbreitenschaltung neben der Einstellung der Aufgabepunkte des Düngers auf den Schleuderscheiben erreicht. Somit kann der Aufgabepunkt individuell eingestellt werden. Durch die wahlweise Möglichkeit, die Schieber gemeinsam oder unabhängig voneinander ver- und/oder einzustellen, kann neben einer Mengeneinstellung auch eine Aufgabepunkteinstellung in gleicher bzw. unterschiedlicher Weise erfolgen. Mit der Mengeneinstellung wird also erfindungsgemäß der Aufgabepunkt gleichzeitig eingestellt. Weiterhin ist es möglich, das Verhältnis der Menge der Auslauföffnung zueinander einzustellen, d. h. zu variieren. Dieses bedeutet, dass aus der einen Auslauföffnung der Schleuderscheibe mehr Dünger als aus der anderen Auslauföffnung zugeführt wird.

Eine einfache Einstellung der Mengeneinstellung und der Aufgabepunkteinstellung ist dadurch möglich, dass jeder Auslauföffnung ein Schieber zugeordnet ist und dass die Schieber gemeinsam in gleicher Weise, in unterschiedlicher Weise und/oder unabhängig voneinander einstellbar sind. Durch die Möglichkeit, die Schieber unabhängig zu verstellen, kann eine abschnittsweise Mengeneinstellung in individueller Weise erfolgen.

Hierdurch ist die Grundvoraussetzung für eine abschnittsweise Mengenreduzierung und - erhöhung sowie für eine Teilbreitenreduzierung und -erhöhung geschaffen.

Eine vorteilhafte Einstellung lässt sich dadurch erreichen, dass jedem Schieber ein Verstellelement zugeordnet ist, welches vorzugsweise von einer elektronischen Einstelleinrichtung gesteuert bzw. geregelt wird. Infolge dieser Maßnahmen kann in einfachster Weise die Düngerverteilung, die Ausbringmenge und die Arbeitsbreite den entsprechend vorgegebenen Flächenverhältnissen angepasst werden.

Weiterhin ist vorgesehen, dass die Auslauföffnungen und die Schieber derart angeordnet und/oder einander zugeordnet sind, dass bei Vergrößerung der Ausbringmenge sich der Aufgabepunkt in Richtung des Scheibenrandes verlagert. Hierdurch wird eine vorteilhafte Einstellung des Aufgabepunktes in einfacher Weise erreicht.

In einer weiteren Ausführung der Erfindung ist vorgesehen, dass die Schleuderscheiben gegenüber den Auslauföffnungen quer zur Fahrtrichtung verstellbar am Rahmen angeordnet sind. Infolge dieser Nlaßnahmen kann in einfacher Weise eine Aufgabepunktverstellung des Düngers auf den Schleuderscheiben erreicht werden. Es ist möglich, die Schleuderscheiben mittels einer Verstelleinrichtung, die von einer elektronischen Einstelleinrichtung gesteuert und geregelt sein kann, entsprechend den vorgegebenen Ausbringverhältnissen anzupassen. Hierbei ist in einer bevorzugten Ausführungsform vorgesehen, dass die Schleuderscheiben in ihrer Lagerung und/oder Getriebe quer zur Fahrtrichtung am Rahmen verstellbar angeordnet sind.

In einer Ausführungsform kann vorgesehen sein, dass die Maßnahmen gemäß der Ansprüche 1 und 6 gemeinsam an einem Streuer verwirklicht sind.

In einer weiteren Ausführungsform ist vorgesehen, dass der Antrieb des Rührorgans über zumindest teilweise innerhalb des Vorratsbehälters angeordnete Antriebselemente erfolgt. Durch diese Maßnahme lässt sich ein vorteilhafter Antrieb für ein langsam laufendes Rührwerk erreichen, wobei gleichzeitig der Vorteil erhalten bleibt, die Antriebswellen in einem Abstand unterhalb des Bodens des Vorratsbehälters enden zu lassen, so dass der einfache Austausch von Schleuderscheiben möglich ist.

Der Antrieb lässt sich einfach dadurch verwirklichen, dass eine quer zur Fahrtrichtung verlaufende, antreibbare Antriebswelle im Vorratsbehälter angeordnet ist und dass an den Enden der Antriebswelle Winkelgetriebe angeordnet sind, wobei deren aufrechte und nach unten ragende Wellen die Rührorgane tragen und antreiben.

Weiterhin kann vorgesehen sein, dass die Auslauföffnungen in einem platten- oder topfförmigen Element angeordnet sind und dass dieses platten- oder topfförmige Element mit den Auslauföffnungen gegenüber dem Vorratsbehälter bzw. den Schleuderscheiben verschiebbar und/oder verdrehbar angeordnet ist. Auch hierdurch lässt sich eine einfache Einstellung des Aufgabepunktes des Düngers auf den Schleuderscheiben erreichen.

Weiterhin kann vorgesehen sein, dass durch die Verstellung der Schieber gegenüber den Auslauföffnungen sowohl die Ausbringmenge wie auch die Lage der Aufgabepunkte ein- bzw. verstellbar ist. Durch die Einstellung der Auslauföffnungen zueinander ist die Streugutverteilung einstellbar bzw. korrigierbar.

Um stark voneinander differierende Arbeitsbreitenbereiche mit ein und demselben Schleuderdüngerstreuer abdecken zu können, ist vorgesehen, dass die Schleuderscheiben auswechselbar auf ihren Antriebswellen angeordnet sind, und dass zumindest zwei Satz Schleuderscheiben für jeweils einen Arbeitsbreitenbereich vorgesehen sind. Somit lässt sich also beispielsweise mit dem einen Satz Schleuderscheiben ein Arbeitsbreitenbereich von etwa 12-18 m, mit einem anderen Satz Schleuderscheiben ein Arbeitsbreitenbereich von etwa 12-24 m, mit einem weiteren Satz Schleuderscheiben ein Arbeitsbreitenbereich von etwa 21-36 m und mit einem weiteren Satz Schleuderscheiben ein Arbeitsbreitenbereich von etwa 28-48 m abdecken.

Es kann weiterhin vorgesehen sein, dass eine Voreinstellung für eine Gruppe von Düngersorten und einem vorerwähnten Arbeitsbreitenbereich durch die Einstellung der Wurfschaufeln auf den Schleuderscheiben vorgenommen wird, wobei hierbei dann vorgesehen ist, dass die Wurfschaufeln in Scheibenebene winkelverschwenkbar und unterschiedlichen Winkelpositionen einstellbar angeordnet sind.

Weiterhin kann für das Grenzstreuen vorgesehen sein, dass die Schieber für das Normalstreuen zum Öffnen der Auslauföffnung von der Drehachse in Richtung des Scheibenrandes bewegt werden, während sie für das Grenzstreuen vom Scheibenrand in Richtung der Drehachse der Schleuderscheibe bewegbar sind. Der Aufgabepunkt für das Grenzstreuen ist somit gegenüber dem Aufgabepunkt für das Normalstreuen in Richtung des Scheibenrandes verlagert.

Weiterhin kann vorgesehen sein, dass die Auslauföffnungen derart verschließbar und zu öffnen sind, dass die Arbeitsbreite reduzierbar bzw. vergrößerbar ist. Hierbei sind die Auslauföffnungen verschließenden und öffnenden Schieber unabhängig voneinander zu betätigen bzw. zu verstellen. Mittels dieser Maßnahme kann in einfachster Weise eine sogenannte Teilbreitenschaltung realisiert werden, d. h., dass auf einfache Weise die Arbeitsbreite zu reduzieren ist, bzw. wenn von einer kleineren Arbeitsbreite ausgegangen wird, zu vergrößern ist.

Das Verstellen bzw. Betätigen der Schieber und die Verlagerung der Auslauföffnungen sowie die Verlagerung der Aufgabeflächen des Düngers auf den Schleuderscheiben kann durch eine elektronische Regel- und/oder Steuereinrichtung nach vorgegebenen Sollwerten, bei evtl. laufender oder intervallweiser Überprüfung, durch Sensoren, erfolgen. Auch kann eine automatische Umstellung von Grenzstreuen mit einseitig steil ablaufender Streustärke zum Feldrand auf Normalstreuen mit beidseitig flach abfallender Streustärke erfolgen. Weiterhin kann über die Schließung einer der beiden Auslauföffnungen pro Scheibe die Arbeitsbreite feinstufig reduziert werden. Somit ist eine asymmetrisch zur Schlepper und Streuer mit sich erstreckende Arbeitsbreite des Düngerstreuers erreichbar.

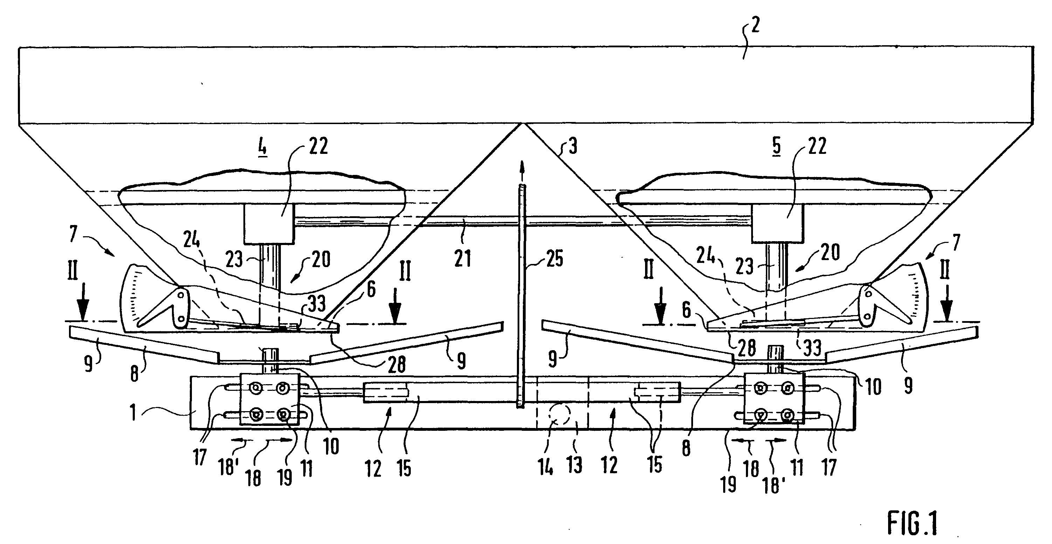

Weitere Einzelheiten der Erfindung sind den übrigen Unteransprüchen, der Beispielsbeschreibung und den Zeichnungen zu entnehmen. Hierbei zeigen
- Fig. 1: den Schleuderdüngerstreuer in Ansicht von hinten und in Prinzipdarstellung,

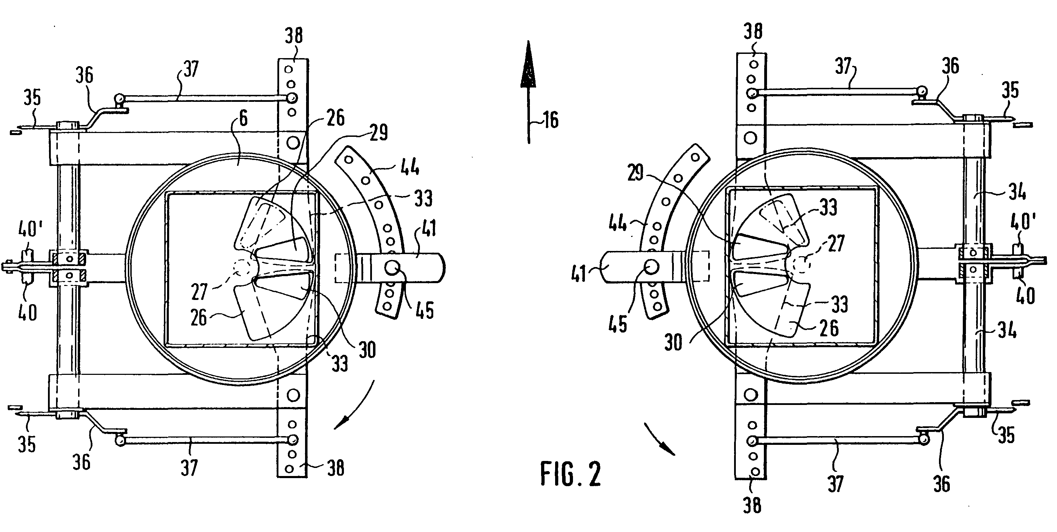

- Fig. 2: die Anordnung der Dosiereinheit in der Ansicht II-II im vergrößerten Maßstab,
- Fig. 3: die linke Dosiereinheit gemäß Fig. 2 in vergrößertem Maßstab,
- Fig. 4: die Auslauföffnungen der Dosiereinrichtung gemäß Fig. 3, wobei beide Auslauföffnungen in gleicher Weise geöffnet sind,
- Fig. 5: die beim Öffnen der Auslauföffnungen gemäß Fig. 4 bei beiden Schleuderscheiben entstehenden Streufächer in der Draufsicht und in Prinzipdarstellung,
- Fig. 6: das Streubild, das beim Öffnen der Auslauföffnungen für beide Schleuderscheiben entsprechend Fig. 4 entsteht,
- Fig. 7: ein Streubild, das in den beiden äußeren Bereichen eine erhöhte Streustärke und im inneren Bereich eine niedrigere Streustärke aufweist
- Fig. 8: die Auslauföffnungen gemäß Fig. 3, wobei die eine Auslauföffnung weiter geöffnet ist als die andere, um das Streubild nach Fig. 7 zu korrigieren,
- Fig. 9: ein Streubild, bei dem auf der linken Seite der äußere Streufächer abgeschaltet ist,
- Fig. 10: die Auslauföffnungen gemäß Fig. 3, wobei nur die eine der beiden Auslauföffnungen geöffnet ist, so dass das Streubild nach Fig. 9 entsteht,
- Fig. 11: ein Grenzstreubild und
- Fig. 12: die Auslauföffnungen gemäß Fig. 3, wobei die eine Auslauföffnung zum Grenzstreuen geöffnet ist, damit das Grenzstreubild nach Fig. 11 entsteht.

Der Schleuderdüngerstreuer weist den Rahmen 1 und den Vorratsbehälter 2 auf. An dem Rahmen 1 und dem Vorratsbehälter 2 sind in bekannter, und daher nicht dargestellter Weise auf der Vorderseite Dreipunktkupplungselemente zum Anbau des Schleuderdüngerstreuers an den Dreipunktkraftheber eines Schleppers angeordnet.

Der Vorratsbehälter 2 ist durch das dachförmige Mittelteil 3 in die beiden Auslauftrichter 4 und 5 aufgeteilt. Die Auslauftrichter 4 und 5 werden auf ihrer Unterseite durch die Bodenplatte 6 mit der Dosiereinrichtung 7 verschlossen. Unterhalb der Dosiereinrichtung 7 ist jeweils eine rotierend angetriebene Schleuderscheibe 8 mit den Wurfschaufeln 9 angeordnet Die Wurfschaufeln 9 sind in bekannter und nicht näher dargestellter Weise in Winkelebene verschwenkbar auf den Schleuderscheiben 8 in unterschiedlichen Winkelanstellungen einstellbar ausgebildet. Die Schleuderscheiben 8 sind auf den Antriebswellen 10 der Winkelgetriebe 11 leicht lösbar angeordnet, so dass sie in einfacher Weise gegen anders ausgebildete Schleuderscheiben mit Wurfschaufeln für andere Arbeitsbreitenbereiche austauschbar sind. Die Schleuderscheiben 8 werden über die Winkelgetriebe 11 und den Wellenzug 12 von dem Mittelgetriebe 13 angetrieben. Das Mittelgetriebe 13 weist die Eingangswelle 14 auf, welche über eine Gelenkwelle mit der Zapfwelle des den Düngerstreuer tragenden Schleppers verbunden ist.

Die Wellen 15 des Wellenzuges 12 sind teleskopierbar ausgebildet, damit die Getriebe 11 mit den Schleuderscheiben 8 quer zur Fahrtrichtung 16 in unterschiedlichen Positionen zur Dosiereinrichtung 7 einstellbar sind. Hierzu sind in dem Rahmen 1 die Langlöcher 17 angeordnet, so dass die Getriebe 11 mit den Schleuderscheiben 8 in den Pfeilrichtungen 18 und 18' verschiebbar sind. Mittels der Schrauben 19 ist das jeweilige Getriebe 11 in den Langlöchem 17 in unterschiedlichen Positionen am Rahmen 1 zu befestigen.

In den Auslauftrichtem 4 und 5 ist jeweils dicht oberhalb der Bodenplatte 6 und der Dosiereinrichtung 7 das langsam bewegbare Rührwerk 20 angeordnet. Zum Antrieb des Rührwerkes 20 ist eine quer zur Fahrtrichtung 16 verlaufende Antriebswelle 21 in den Vorratsbehälter 2 hineinragend angeordnet. An den Enden der Antriebswelle 21 ist jeweils ein Winkelgetriebe 22 angeordnet. Die aufrecht und nach unten ragenden Wellen 23 der Winkelgetriebe 22 tragen das Rührorgan 24. Die Antriebswelle 21 ist über einen Kettentrieb 25 von der Antriebswelle 15 anzutreiben.

An dem unteren Ende des Vorratsbehälters 2 ist die Bodenplatte 6 befestigt. In der Bodenplatte 6 ist die sektorförmige Öffnung 26 angebracht. An der Bodenplatte 6 ist, vorzugsweise in deren Mitte, der Bolzen 27 befestigt, auf dem die Dosierplatte 28 befestigt ist. In der Dosierplatte 28 sind die beiden Auslauföffnungen 29 und 30 angeordnet. An der Dosierplatte 28 sind Halter 31 befestigt. An diesen Haltern 31 sind jeweils mittels der Bolzen 32 die Schieber 33 an den Dosierplatten 28 angeordnet. Jeder Auslauföffnung 29 und 30 ist ein Einstellschieber 33 zugeordnet. An den äußeren Enden der Halter 31 ist die Einstellwelle 34, welche geteilt ausgebildet ist, gelagert. Auf der einen Seite der Einstellwelle 34 befindet sich der Zeiger 35 und der Hebel 36, welcher über eine Stange 37 mit dem Verstellhebel 38 des Schiebers 33 über Kugelgelenke gekoppelt ist. Auf der anderen Seite der Einstellwelle 34 befindet sich der Betätigungshebel 39, an dem in nicht dargestellter Weise das Betätigungselement 40 angeordnet ist. Dieses Betätigungselernent 40 kann als Hydraulikzylinder, Elektromotor etc. ausgebildet sein. Über die Schieber 33 lässt sich die Öffnungsweite der Auslauföffnung einstellen bzw. die Auslauföffnungen 29 und 30 verschließen.

Die Dosierplatte 28 ist um den Bolzen 27 verdrehbar angeordnet, so dass die Auslauföffnungen 29 und 30 in unterschiedlichen Positionen einstellbar sind. Hierzu ist an der Dosierplatte 28 der Einstellhebel 41 angeordnet, welcher mit der Dosierplatte 28 in den durch die Pfeile 42 und 43 gekennzeichneten Richtungen verschwenkbar ist. Hierdurch sind ebenfalls die Auslauföffnungen 29 und 30 in den beiden Pfeilrichtungen 42 und 43 verstellbar. Zur Festlegung der Dosierplatte 28 wird der Hebel 41 an dem Verstellsegment 44, welches am Behälter 2 bzw. am Rahmen 1 befestigt ist, in festlegbaren Positionen durch ein Feststellelement 45, beispielsweise durch den Bolzen, der in die unterschiedlichen Bohrungen 46 des Verstellsegmentes 44 einsteckbar ist, fixiert.

Durch die Verdrehung der Auslauföffnungen 29 und 30 ist der Aufgabepunkt des Düngers auf den unterhalb der Dosiereinrichtung 7 angeordneten Schleuderscheiben 8 ver- und/oder einstellbar. An dem Hebel 41 kann ein motorisches Verstellelement angeordnet werden, welches von einer elektronischen oder elektrischen Steuer- und/oder Regeleinrichtung betätigbar ist. Somit kann die Verlagerung des Aufgabepunktes des Düngers durch Verstellen der Auslauföffnungen automatisch erfolgen.

Das den Schiebem 33 zugeordnete Verstellelement 40 kann von einer elektronischen Einstelleinrichtung gesteuert und geregelt werden. Es ist möglich, jedem Schieber 33 ein eigenes Verstellelement 40 bzw. 40' zuzuordnen, so dass jede Auslauföffnung 29, 30 individuell eingestellt werden kann. In diesem Fall muss der die Betätigungshebel 39 verbindende Bolzen 39' entfernt werden. Somit ist das Ausbringverhältnis der Auslaufquerschnitte 29' und 30 zueinander einstell- und veränderbar.

Es ist möglich, unterhalb der beiden Einstellschieber 33 einen sogenannten, jedoch nicht dargestellten Verschlussschieber anzubringen, mit dem die Auslauföffnungen 29, 30 geöffnet und geschlossen werden, während die Schieber 33 nur zur Einstellung der Ausbringmengen und der Einstellung der Aufgabepunkte des Düngers auf den Schleuderscheiben 8 dienen.

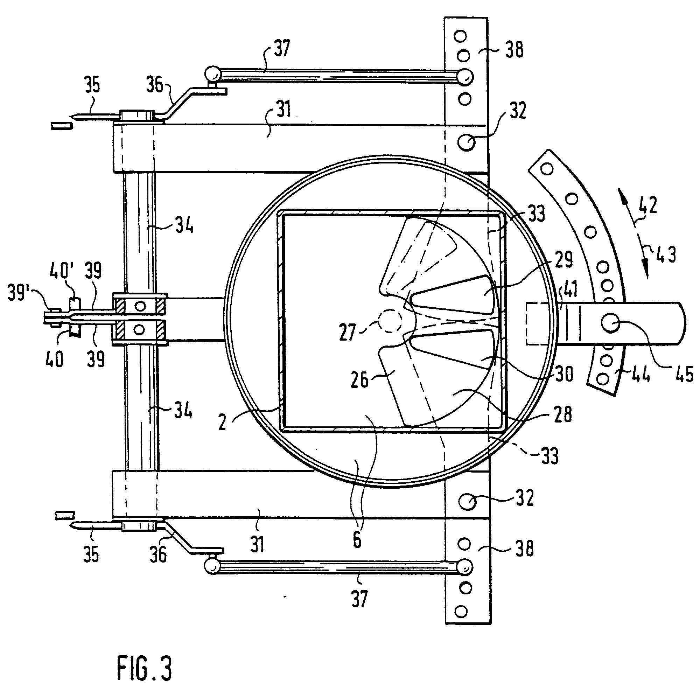

Des Weiteren ist es möglich, über ein gemeinsames Verstellelement 40 die Auslauföffnungen 29 und 30 unterschiedlich zu öffnen, in dem die Stangen 37 an den Verstellhebel 38 der Schieber 33 unterschiedlich eingehängt wird. In dem dargestellten Ausführungsbeispiel gemäß Fig. 3 sind die Verbindungsstangen 37 in gleichem Abstand zum Drehpunkt eingehängt. Es ist jedoch auch möglich, die Verbindungsstangen 33 in unterschiedlichem Abstand zum Drehpunkt in den Verstellhebeln 33 einzuhängen, wie dieses vorstehend erwähnt ist, so dass das Ausbringverhältnis der beiden Auslaufquerschnitte 29' und 30' zueinander einstellbar und veränderbar ist.

Die Auslauföffnungen 29 und 30 und die Schieber 33 sind derart zueinander angeordnet, dass bei Vergrößerung der Ausbringmenge sich der Aufgabepunkt in Richtung des Scheibenrandes der Schleuderscheiben 8 verlagert.

Durch die Verstellung der Schieber 33 gegenüber den Auslauföffnungen 29 und 30 wird sowohl die Ausbringmenge wie auch die Lage der Aufgabepunkte ein- und verstellt. Durch die Einstellung der Auslauföffnungen 29 und 30 zueinander ist die Streugutverteilung über die Streu- und Arbeitsbreite einstellbar bzw. korrigierbar.

Es erfolgt mit der Mengeneinstellung eine gleichzeitige Aufgabepunktverstellung. Des Weiteren kann in nicht dargestellter Weise der Drehpunkt der Schieber 33 verschoben werden. Hierdurch wird ebenfalls eine Aufgabepunktverlagerung des Düngers bei einer Mengenveränderung erreicht.

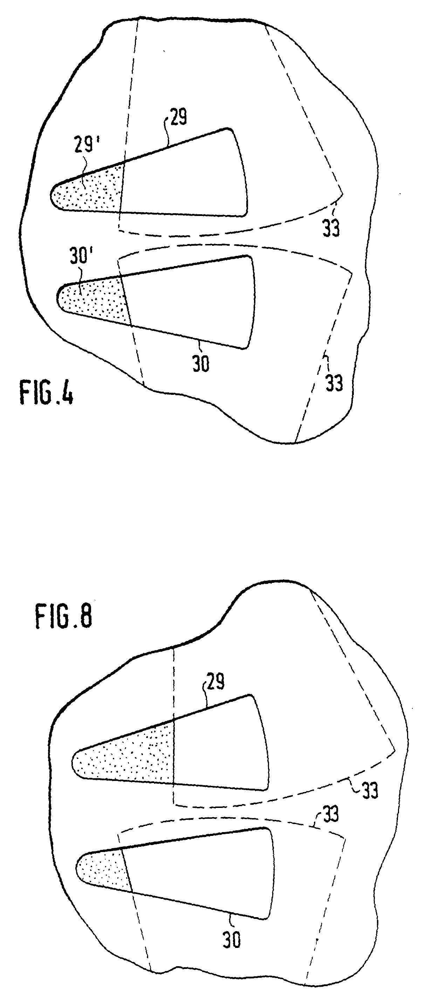

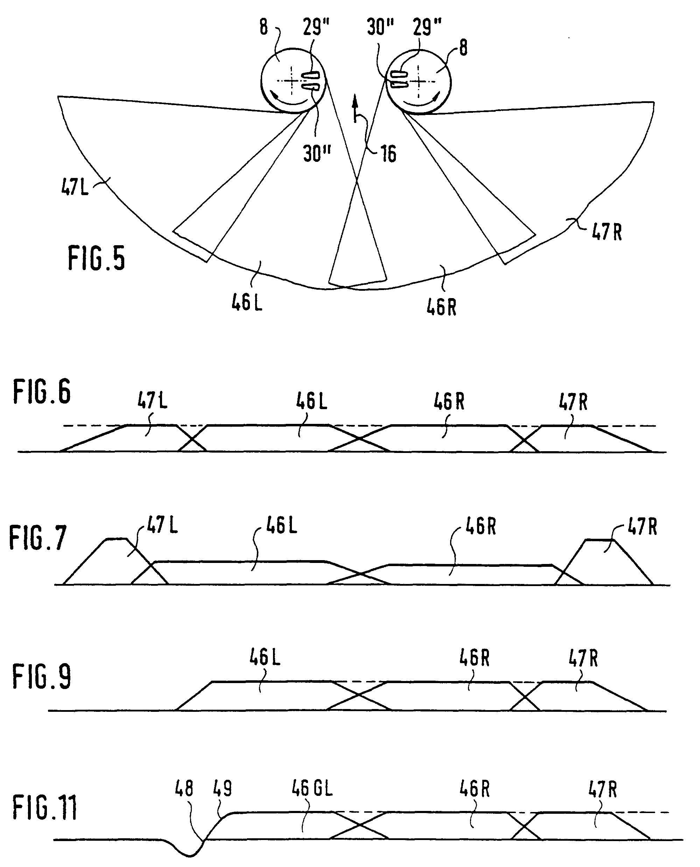

Wie die Fig. 4 zeigt, werden für eine bestimmte Ausbringmenge und Streubreite beispielsweise beide Auslauföffnungen 29 und 30 durch die Dosierschieber 33 in gleicher Weise geöffnet, so dass die Auslaufquerschnitte 29' und 30' freigegeben sind. Der Dünger fällt dann durch die Auslaufquerschnitte 29' und 30' auf die Aufgabepunkte (bzw. -flächen) 29" und 30" auf die Schleuderscheiben, wie dieses in Fig. 5 angedeutet ist. Die jeweils auf die Aufgabeflächen 29" aufgegebenen Düngerpartikel werden über ein Streusektor 46L bzw. 46R ausgestreut, während die auf die Aufgabenflächen 30" aufgegebenen Düngerpartikel über die Streusektoren 48L und 48R verteilt werden, wie dieses in Fig. 5 schematisch dargestellt ist. Es entsteht dann das in Fig. 6 schematisch dargestellte Streubild mit einer gleichmäßigen Streugutverteilung über die gesamte Arbeitsbreite.

Die Fig. 7 zeigt die Düngerverteilung bei einer anderen Streugutart, wie sie in dem Beispiel nach Fig. 6 verteilt wird. Bei dieser Düngersorte werden, wenn die Auslauföffnungen 29 und 30 gleich eingestellt werden, wie in Fig. 4 dargestellt ist, in beiden Außenbereichen zu viel Dünger abgeworfen. Um nun eine gleichmäßige Streugutverteilung zu erreichen, wird der Auslaufquerschnitt 29' der Auslauföffnung 29 vergrößert, während der Auslaufquerschnitt 30' der Auslauföffnung 30 verkleinert wird, wie dieses die Fig. 8 zeigt. Es wird dann wiederum eine gleichmäßige Streugutverteilung erreicht. Diese Einstellung kann durch eine den Schiebern 33 zugeordnete Einstelleinrichtung, die mit einer elektrischen oder elektronischen Regeleinrichtung verbunden ist, vorgenommen werden Durch die vorbeschriebene Verstellung erfolgt somit eine Aufgabepunktverlagerung mit gleichzeitiger Mengenverstellung. Hierdurch ist in vorteilhafter Weise eine Streubildkorrektur möglich. In diesem Fall ist jedem Schieber 33 eine eigene Einstelleinrichtung zugeordnet, so dass jeder Schieber 33 individuell eingestellt werden kann.

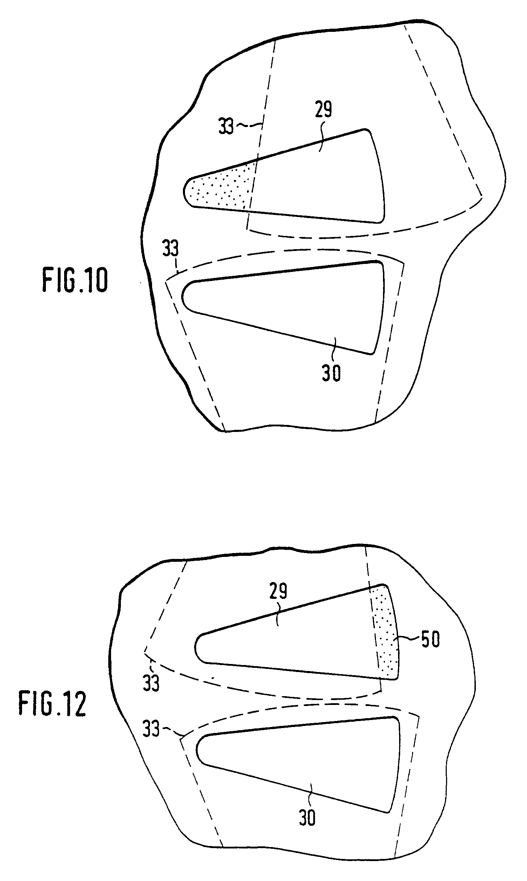

Um die Arbeitsbreite zu reduzieren, wie in Fig. 9 gezeigt ist, wird, wie die Fig. 10 zeigt, nur die eine Auslauföffnung 29 der linken Dosiervorrichtung geöffnet, während die andere Auslauföffnung 30 der linken Dosiervorrichtung verschlossen bleibt. Hierdurch ist in einfacher Weise eine Arbeitsbreitenreduzierung bzw. Teilbreitenschaltung möglich. In diesem Falle wird nur der für den inneren Streusektor 46L zuständigen Auslauföffnung 29 Dünger zugeführt, während die für den äußeren Streusektor 47L verantwortliche Auslauföffnung 30 verschlossen ist. Dieses bedeutet, dass die von einer Schleuderscheibe erreichbare Arbeitsbreite verringer- bzw. vergrößerbar ist.

Die Auslauföffnungen 29 und 30 der anderen Schleuderscheibe 8 bleiben geöffnet, so dass die Düngerpartikel über die Streusektoren 46R und 47R verteilt werden.

Zum Grenzstreuen soll beispielsweise das Grenzstreubild gemäß Fig. 11 erreicht werden. Hierbei ist der äußere Grenzstreufächer 46GL mit einer steil zum Feldrand 48 abfallenden Streuflanke 49 ausgestattet. Für das Grenzstreuen wird bei der linken Schleuderscheibe 8 die Auslauföffnung 30 durch den Schieber verschlossen, während die Auslauföffnung 30 wie folgt geöffnet wird:

Für das Grenzstreuen wird der Schieber 33 der Auflauföffnung 29 zum Öffnen vom Scheibenrand in Richtung der Drehachse der Schleuderscheibe 8 bewegt, während die Auflauföffnung 30 geschlossen bleibt. Es entsteht der Öffnungsquerschnitt 50, durch welchen der Dünger auf die Schleuderscheibe gelangt. Somit ist also in einfacher Weise das Grenzstreuen durchführbar. Der Aufgabepunkt für das Grenzstreuen liegt gegenüber dem Aufgabepunkt für das Normalstreuen dichter zum Scheibenrand.

## Patentansprüche

1. Schleuderdüngerstreuer mit Vorratsbehälter (2), in dessen unterem Bereich mehrere als über Schieber (33) in ihrer Öffnungsweite einstellbare und verschließbare Auslauföffnungen (29, 30) ausgebildete Dosierorgane (7) angeordnet sind, unter denen sich zumindest zwei rotierend angetriebene Schleuderscheiben (8) mit Wurfschaufeln (9) befinden, denen von den Dosierorganen (7) die sich im Vorratsbehälter (2) befindlichen Düngemittelpartikel in vorbestimmter und einstellbarer Weise auf zumindest zwei vorbestimmte Stellen, insbesondere in der Form von Aufgabepunkten, pro Scheibe (8) aufgegeben werden, wobei die Schieber (33) gemeinsam und/oder unabhängig voneinander ver- und/oder einstellbar sind, **dadurch gekennzeichnet, dass** für jede Auslauföffnung (29, 30) ein Schieber (33) zur gleichzeitigen Einstellung der Ausbringmenge und des Aufgabepunktes und jeweils ein weiterer Schieber für jede Auslauföffnung (29, 30) oder ein weiterer Schieber für beide Auslauföffnungen (29, 30) gemeinsam für das Öffnen und Schließen der Auslauföffnungen (29, 30) vorgesehen ist.

2. Schleuderdüngerstreuer nach Anspruch 1, **dadurch gekennzeichnet, dass** pro Schleuderscheibe (8) zwei Auslauföffnungen (29,30) vorgesehen sind.

3. Schleuderdüngerstreuer nach einem oder mehreren der vorstehenden Ansprüche, **dadurch gekennzeichnet, dass** die jeder Auslauföffnung (29,30) zugeordneten Schieber (33) gemeinsam in gleicher Weise, in unterschiedlicher Weise und/oder unabhängig voneinander einstellbar sind.

4. Schleuderdüngerstreuer nach einem oder mehreren der vorstehenden Ansprüche, **dadurch gekennzeichnet, dass** jedem Schieber (33) ein Verstellelement (40, 40') zugeordnet ist, welches vorzugsweise von einer elektronischen Einstelleinrichtung gesteuert bzw. geregelt wird.

5. Schleuderdüngerstreuer nach einem oder mehreren der vorstehenden Ansprüche, **dadurch gekennzeichnet, dass** die Auslauföffnung (29, 30) und die Schieber (33) derart angeordnet und/oder einander zugeordnet sind, dass bei Vergrößerung der Ausbringmenge sich der Aufgabepunkt in Richtung des Scheibenrandes verlagert.

6. Schleuderdüngerstreuer nach wenigstens einem der vorangehenden Ansprüche, **dadurch gekennzeichnet, dass** die Schleuderscheiben (8) gegenüber den Auslauföffnungen (29, 30) quer zur Fahrtrichtung (16) verstellbar am Rahmen (1) angeordnet sind.

7. Schleuderdüngerstreuer nach Anspruch 6, **dadurch gekennzeichnet, dass** die Schleuderscheiben (8) mit ihrer Lagerung und/oder Getriebe (11) quer zur Fahrtrichtung (16) am Rahmen (1) verstellbar angeordnet sind.

8. Schleuderdüngerstreuer nach wenigstens einem der vorstehenden Ansprüche, **dadurch gekennzeichnet, dass** oberhalb der Auslauföffnungen (29, 30) im Vorratsbehälter (2) ein langsam bewegbares Rührwerk (20) angeordnet ist und dass der Antrieb des Rührorgans (24) über zumindest teilweise innerhalb des Vorratsbehälters (2) angeordnete Antriebselemente (22, 23) erfolgt.

9. Schleuderdüngerstreuer nach Anspruch 8, **dadurch gekennzeichnet, dass** das Rührwerk (20) rotierend antreibbar ist.

10. Schleuderdüngerstreuer nach einem oder mehreren der vorstehenden Ansprüche, **dadurch gekennzeichnet, dass** eine quer zur Fahrtrichtung (16) verlaufende, antreibbare Antriebswelle (21) im Vorratsbehälter (2) angeordnet ist, und dass an den Enden der Antriebswelle (21) Winkelgetriebe (22) angeordnet sind, wobei deren aufrechte und nach unten ragende Wellen (23) Rührorgane (24) tragen und antreiben.

11. Schleuderdüngerstreuer nach einem oder mehreren der vorstehenden Ansprüche, **dadurch gekennzeichnet, dass** die Auslauföffnungen (29, 30) in einem platten - oder topfförmigen Element angeordnet sind und dieses platten- oder topfförmige Element (28) mit den Auslauföffnungen (29, 30) gegenüber dem Vorratsbehälter (2) bzw. den Schleuderscheiben (8) verschiebbar und/oder verdrehbar angeordnet ist.

12. Schleuderdüngerstreuer nach einem oder mehreren der vorstehenden Ansprüche, **dadurch gekennzeichnet, dass** durch die Verstellung der Schieber (33) gegenüber den Auslauföffnungen (29, 30) sowohl die Ausbringmenge wie auch die Lage der Aufgabepunkte ein- bzw. verstellbar ist.

13. Schleuderdüngerstreuer nach einem oder mehreren der vorstehenden Ansprüche, **dadurch gekennzeichnet, dass** durch die Einstellung der Auslauföffnungen (29, 30) zueinander die Streugutverteilung einstellbar bzw. korrigierbar ist.

14. Schleuderdüngerstreuer nach einem oder mehreren der vorstehenden Ansprüche, **dadurch gekennzeichnet, dass** die Schleuderscheiben (8) auswechselbar auf ihren Antriebswellen (10) angeordnet sind, und dass zumindest zwei Satz Schleuderscheiben (8) für jeweils einen Arbeitsbreitenbereich vorgesehen sind.

15. Schleuderdüngerstreuer nach einem oder mehreren der vorstehenden Ansprüche, **dadurch gekennzeichnet, dass** die Wurfschaufeln (9) in Scheibenebene winkelverschwenkbar und in unterschiedlichen Winkelpositionen einstellbar angeordnet sind.

16. Schleuderdüngerstreuer nach einem oder mehreren der vorstehenden Ansprüche, **dadurch gekennzeichnet, dass** die Zuordnung der Schieber (33) zu den Auslauföffnungen und die Anordnung der Auslauföffnungen (29, 30) derart ist, dass mit gleichzeitiger Mengeneinstellung eine Aufgabenpunktverstellung erfolgt.

17. Schleuderdüngerstreuer nach einem oder mehreren der vorstehenden Ansprüche, **dadurch gekennzeichnet, dass** die Schieber (33) für das Normalstreuen zum Öffnen der Auslauföffnungen von der Drehachse in Richtung des Scheibenrandes bewegt werden, während sie für das Grenzstreuen vom Scheibenrand in Richtung der Drehachse der Schleuderscheibe (8) bewegbar sind.

18. Schleuderdüngerstreuer nach einem oder mehreren der vorstehenden Ansprüche, **dadurch gekennzeichnet, dass** der Aufgabepunkt für das Grenzstreuen gegenüber dem Aufgabepunkt für das Normalstreuen in Richtung des Scheibenrandes verlagerbar ist.

19. Schleuderdüngerstreuer nach einem oder mehreren der vorstehenden Ansprüche, **dadurch gekennzeichnet, dass** die Auslauföffnungen (29, 30) derart verschließbar und zu öffnen sind, dass die Arbeitsbreite reduzier- bzw. vergrößerbar ist.

20. Schleuderdüngerstreuer nach einem oder mehreren der vorstehenden Ansprüche, **dadurch gekennzeichnet, dass** die die Auslauföffnungen (29, 30) verschließbaren und öffnenden Schieber (33) unabhängig voneinander zu betätigen und/oder zu verstellen sind.

## Claims

1. Centrifugal fertiliser spreader, having a hopper (2), in the lower region of which there are disposed a plurality of metering members (7), which are in the form of outlet apertures (29, 30), which are settable in respect of their width of opening via slides (33) and are closable, at least two rotatably driven centrifugal discs (8), provided with throwing vanes (9), being situated beneath said metering members, to which throwing vanes are delivered by the metering members (7) the particles of fertiliser, situated in the hopper (2) in a predetermined and settable manner at at least two predetermined locations, more especially in the form of delivery points, per disc (8), the slides (33) being adjustable and/or settable jointly and/or independently of each other, **characterised in that** one slide (33) for the simultaneous setting of the output quantity and of the delivery point is provided for each outlet aperture (29, 30), and respectively one additional slide is provided for each outlet aperture (29, 30), or one additional slide is provided for both outlet apertures (29, 30) jointly for the opening and closing of the outlet apertures (29, 30).

2. Centrifugal fertiliser spreader according to claim 1, **characterised in that** two outlet apertures (29, 30) are provided per centrifugal disc (8).

3. Centrifugal fertiliser spreader according to one or more of the preceding claims, **characterised in that** the slides (33), associated with each outlet aperture (29, 30), are settable jointly in an identical manner, in a different manner and/or independently of each other.

4. Centrifugal fertiliser spreader according to one or more of the preceding claims, **characterised in that** an adjustment member (40, 40') is associated with each slide (33) and is preferably controlled or respectively regulated by an electronic setting means.

5. Centrifugal fertiliser spreader according to one or more of the preceding claims, **characterised in that** the outlet aperture (29, 30) and the slides (33) are disposed and/or associated with each other in such a manner that the delivery point shifts in the direction of the disc edge as the output quantity increases.

6. Centrifugal fertiliser spreader according to at least one of the preceding claims, **characterised in that** the centrifugal discs (8) are disposed on the frame (1) so as to be adjustable relative to the outlet apertures (29, 30) transversely relative to the direction of travel (16).

7. Centrifugal fertiliser spreader according to claim 6, **characterised in that** the centrifugal discs (8) are disposed so as to be displaceable on the frame (1) with their bearing surface and/or transmission mechanism (11) transversely relative to the direction of travel (16).

8. Centrifugal fertiliser spreader according to at least one of the preceding claims, **characterised in that** a slowly displaceable agitator (20) is disposed above the outlet apertures (29, 30) in the hopper (2), and **in that** the agitator (24) is driven via driving elements (22, 23), at least some of which are disposed internally of the hopper (2).

9. Centrifugal fertiliser spreader according to claim 8, **characterised in that** the agitator (20) is rotatably drivable.

10. Centrifugal fertiliser spreader according to one or more of the preceding claims, **characterised in that** a drivable drive shaft (21), which extends transversely relative to the direction of travel (16), is disposed in the hopper (2), and **in that** mitre gears (22) are disposed at the ends of the drive shaft (21), the upwardly extending and downwardly protruding shafts (23) of said mitre gears carrying and driving agitating members (24).

11. Centrifugal fertiliser spreader according to one or more of the preceding claims, **characterised in that** the outlet apertures (29, 30) are disposed in a plate-like or cup-shaped element, and this plate-like or cup-shaped element (28), with the outlet apertures (29, 30), is disposed so as to be displaceable and/or rotatable relative to the hopper (2) or respectively the centrifugal discs (8).

12. Centrifugal fertiliser spreader according to one or more of the preceding claims, **characterised in that** both the output quantity and the position of the delivery points is settable or respectively adjustablee by the adjustment of the slides (33) relative to the outlet apertures (29, 30).

13. Centrifugal fertiliser spreader according to one or more of the preceding claims, **characterised in that** the distribution of broadcasting operation material is settable or respectively correctable by setting the outlet apertures (29, 30) relative to each other.

14. Centrifugal fertiliser spreader according to one or more of the preceding claims, **characterised in that** the centrifugal discs (8) are interchangeably disposed on their drive shafts (10), and **in that** at least two sets of centrifugal discs (8) are provided for each working width range.

15. Centrifugal fertiliser spreader according to one or more of the preceding claims, **characterised in that** the throwing vanes (9) are disposed so as to be angularly pivotable in the disc plane and so as to be settable in various angular positions.

16. Centrifugal fertiliser spreader according to one or more of the preceding claims, **characterised in that** the association between the slides (33) and the outlet apertures is such, and the disposition of the outlet apertures (29, 30) is such, that an adjustment of the delivery points is effected with a simultaneous setting of the quantity.

17. Centrifugal fertiliser spreader according to one or more of the preceding claims, **characterised in that** the slides (33) for the normal broadcasting operation are moved away from the axis of rotation in the direction of the disc edge to open the outlet apertures, while they are displaceable from the disc edge in the direction of the axis of rotation of the centrifugal disc (8) for the limited broadcasting operation.

18. Centrifugal fertiliser spreader according to one or more of the preceding claims, **characterised in that** the delivery point for the limited broadcasting operation is displaceable relative to the delivery point for the normal broadcasting operation in the direction of the disc edge.

19. Centrifugal fertiliser spreader according to one or more of the preceding claims, **characterised in that** the outlet apertures (29, 30) are closable and are to be opened in such a manner that the working width can be reduced or respectively enlarged.

20. Centrifugal fertiliser spreader according to one or more of the preceding claims, **characterised in that** the slides (33), which can close and open the outlet apertures (29, 30), are to be actuated and/or adjusted independently of each other.

## Revendications

1. Epandeur centrifuge d'engrais comportant un réservoir (2) dont la zone inférieure comporte plusieurs organes de dosage (7) réalisés par des orifices de sortie (29, 30) réglables et susceptibles d'être fermés par des tiroirs (33), avec en dessous de ceux-ci au moins deux disques d'épandage (8) entraînés en rotation, équipés de palettes d'éjection (9) et recevant à partir des organes de dosage (7), les particules d'engrais du réservoir (2) d'une manière prédéfinie et réglable en au moins deux endroits prédéfinis notamment sous la forme de point d'émission pour chaque disque (8),
les tiroirs (33) étant réglables en commun et/ou indépendamment l'un de l'autre,
**caractérisé en ce que**
pour chaque orifice de sortie (29, 30) il est prévu un tiroir (33) pour régler simultanément la quantité distribuée et le point d'impact et chaque fois un autre tiroir pour chaque orifice de sortie (29, 30) ou un autre tiroir pour les deux orifices de sortie (29, 30), pour assurer en commun l'ouverture et la fermeture des orifices de sortie (29, 30).

2. Epandeur centrifuge d'engrais selon la revendication 1,
**caractérisé par**
deux orifices de sortie (29, 30) pour chaque disque d'épandage (8).

3. Epandeur centrifuge d'engrais selon l'une ou plusieurs des revendications précédentes,
**caractérisé en ce que**
les tiroirs (33) associés à chaque orifice de sortie (29, 30) sont réglables en commun de la même manière, de façon différente et/ou indépendamment l'un de l'autre.

4. Epandeur centrifuge d'engrais selon l'une ou plusieurs des revendications précédentes,
**caractérisé par**
un élément de réglage (40, 40') associé à chaque tiroir (33) et qui est commandé ou régulé de préférence par une installation de réglage électronique.

5. Epandeur centrifuge d'engrais selon l'une ou plusieurs des revendications précédentes,
**caractérisé en ce que**
l'orifice de sortie (29, 30) et les tiroirs (33) sont disposés et/ou installés les uns par rapport aux autres pour que lorsqu'on augmente la quantité à distribuer, le point d'émission se déplace en direction du bord du disque.

6. Epandeur centrifuge d'engrais selon l'une ou plusieurs des revendications précédentes,
**caractérisé en ce que**
les disques d'épandage (8) sont installés de manière réglable sur le châssis (1) par rapport aux orifices de sortie (29, 30), transversalement à la direction de déplacement (16).

7. Epandeur centrifuge d'engrais selon la revendication 6,
**caractérisé en ce que**
les disques d'épandage (8) sont réglables par leur palier et/ou leur transmission (11), transversalement à la direction de déplacement (16) sur le châssis (1).

8. Epandeur centrifuge d'engrais selon l'une quelconque revendication,
**caractérisé en ce qu'**
au-dessus les orifices de sortie (29, 30) dans le réservoir d'alimentation (2) on a un mécanisme agitateur (20) à mouvement lent et l'entraînement de l'organe agitateur (24) se fait par des éléments d'entraînement (22, 23) qui se trouvent au moins en partie dans le réservoir (2).

9. Epandeur centrifuge d'engrais selon la revendication 8,
**caractérisé en ce que**
le mécanisme agitateur (20) est entraîné en rotation.

10. Epandeur centrifuge d'engrais selon l'une ou plusieurs des revendications précédentes,
**caractérisé par**
un arbre d'entraînement (21), entraîné, dirigé transversalement à la direction de déplacement (16) dans le réservoir d'alimentation (2), et dont les extrémités de l'arbre d'entraînement (21) comportent des renvois d'angle (22) dont les arbres relevés et ce dirigés vers le bas (23) portent et entraînent des organes agitateurs (24).

11. Epandeur centrifuge d'engrais selon l'une ou plusieurs des revendications précédentes,
**caractérisé en ce que**
les orifices de sortie (29, 30) sont prévus dans un élément en forme de plaque ou de pot et cet élément (28) en forme de plaque ou de pot peut coulisser et/ou pivoter avec ces orifices de sortie (29, 30) par rapport au réservoir d'alimentation (2) ou au disque d'épandage (8).

12. Epandeur centrifuge d'engrais selon l'une ou plusieurs des revendications précédentes,
**caractérisé par**
le réglage du tiroir (33) par rapport aux orifices de sortie (29, 30) permettant de régler la quantité distribuée et de déplacer la position du point d'émission.

13. Epandeur centrifuge d'engrais selon l'une ou plusieurs des revendications précédentes,
**caractérisé en ce que**
par le réglage des orifices de sortie (29, 30) les uns par rapport aux autres on règle ou on corrige la répartition de produits d'épandage.

14. Epandeur centrifuge d'engrais selon l'une ou plusieurs des revendications précédentes,
**caractérisé en ce que**
les disques d'épandage (8) sont installés de manière interchangeable sur les arbres d'entraînement (10) et au moins deux jeux de disques d'épandage (8) sont prévus chaque fois pour une plage de largeur de travail.

15. Epandeur centrifuge d'engrais selon l'une ou plusieurs des revendications précédentes,
**caractérisé en ce que**
les palettes d'éjection (9) sont montées de manière à pivoter angulairement dans le plan du disque et peuvent être réglées dans des positions angulaires différentes.

16. Epandeur centrifuge d'engrais selon l'une ou plusieurs des revendications précédentes,
**caractérisé en ce que**
l'association des tiroirs (33) aux orifices de sortie et la disposition des orifices de sortie (29, 30) sont telles que le réglage du point d'émission se fait simultanément avec le réglage quantitatif.

17. Epandeur centrifuge d'engrais selon l'une ou plusieurs des revendications précédentes,
**caractérisé en ce que**
les tiroirs (33) sont déplacés en direction du bord de disque pour l'épandage normal, pour ouvrir les orifices de sortie, en s'écartant de l'axe de rotation, alors que pour l'épandage en limite ils sont déplacés du bord du disque en direction de l'axe de rotation du disque d'épandage (8).

18. Epandeur centrifuge d'engrais selon l'une ou plusieurs des revendications précédentes,
**caractérisé en ce que**
le point d'émission pour l'épandage en limite peut être déplacé par rapport au point d'émission de l'épandage normal en direction du bord du disque.

19. Epandeur centrifuge d'engrais selon l'une ou plusieurs des revendications précédentes,
**caractérisé en ce que**
les orifices de sortie (29, 30) peuvent être fermés ou ouverts de façon à réduire ou augmenter la largeur de travail.

20. Epandeur centrifuge d'engrais selon l'une ou plusieurs des revendications précédentes,
**caractérisé en ce que**
les tiroirs (33) qui ouvrent ou ferment les orifices de sortie (29, 30) sont actionnés et/ou réglés indépendamment les uns des autres.
